(19) Europäisches Patentamt
European Patent Office
Office européen des brevets

(11) **EP 4 005 907 A1**

(12) **EUROPEAN PATENT APPLICATION**

(43) Date of publication:
**01.06.2022 Bulletin 2022/22**

(21) Application number: **20306439.9**

(22) Date of filing: **25.11.2020**

(51) International Patent Classification (IPC):
**B62K 3/02** *(2006.01)*    **B62K 19/36** *(2006.01)*

(52) Cooperative Patent Classification (CPC):
**B62K 3/02; B62K 19/36**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **EnSelle**
**78870 Bailly (FR)**

(72) Inventors:
• **DUMAS, Jean-Philippe**
  **78870 BAILLY EN FRANCE (FR)**
• **LALLEMANT, Vincent**
  **78000 VERSAILLES (FR)**

(74) Representative: **Casalonga**
**Casalonga & Partners**
**Bayerstraße 71/73**
**80335 München (DE)**

(54) **FRAME FOR A BICYCLE OR A PUSHBIKE**

(57) This frame (6) comprises a main tube (10), a head tube (22), a pedal assembly (32) forming a pedal circle (34), a seat tube (46) able to support a saddle (48). The saddle (48) is able to slide along the seat tube (46) in a plurality of intermediate positions between a fully retracted position and a fully extended position. The seat tube (46) is so arranged, with respect to the main tube (10), that, whatever the position of the saddle (48) is between the fully retracted position and the fully extended position, distances xa and xb satisfy a relationship:

$$x_a = A * x_b$$

$$0.9 < A < 0.95$$

wherein xa is the distance between an upper centre of gravity (52) of the saddle (48) and and the ground surface (4) and xb is the distance between the upper centre of gravity (52) a centre (36) of the pedal circle (34).

FIG.2

EP 4 005 907 A1

**Description**

The present invention relates to the technical field of bicycles and/or pushbikes, in particular to those intended to be used by children.

Regardless of whether the user is a child or an adult, learning to ride a bicycle is generally considered difficult. People trying to ride a bicycle without experience generally fall, which may lead to wounds that may be severe. Furthermore, once the user has fallen and/or is wounded, the user's self-confidence may be affected in such a way that it does not want to try again riding a bicycle. A vicious circle arises wherein the user does not want to ride a bicycle because he has not learnt how to ride yet, and wherein the user never learns to ride because he does not ride the bicycle.

To solve this problem, some bicycles may be equipped with training wheels. Such training wheels have a smaller size than the size of the bicycle wheels and are arranged laterally on each side of the rear wheel of the bicycle. Such training wheels are intended to prevent the bicycle from falling.

Although such a device allows a user to ride a bicycle while decreasing the chances of falling, this solution is not considered fully satisfactory. Indeed, when the user feels confident on the bicycle with training wheels, one implements a disassembling step in order to take the training wheels off the bicycle. During this step, the user may lose its self-confidence. When the training wheels are taken off, the user is no longer prevented from falling laterally, which may lead to a lack of self-confidence and to the precited vicious circle.

Another solution, the dandy horse, consists of a frame, a front wheel and a rear wheel. The frame is so designed that the user, generally a child, may seat on a saddle while being able to put both feet flat on the ground. The dandy horse does not include pedals, the propulsion being implemented by impulsions of the feet of the user directly on the ground.

Such a dandy horse, also known as a balance bicycle or pushbike, is quite popular because it allows a user, for instance a child, become familiar with a bicycle-like device. Nevertheless, once the user is familiar with the dandy horse, he then starts using a bicycle. Then, he can no longer put both feet flat on the ground and he starts experiencing the above-mentioned vicious circle.

The invention aims at overcoming the above-mentioned drawbacks.

More specifically, the invention aims at allowing a user to learn how to ride a bicycle in a more efficient and less risky manner.

According to a first aspect of the invention, it is proposed a frame for a bicycle or a dandy horse intended to rest on a ground surface, the frame comprising a main tube having a first end and a second end, a head tube connected to the first end, a pedal assembly mechanically connected to the main tube, the pedal assembly forming a pedal circle, the frame including a seat tube connected to the main tube, the seat tube being able to support a saddle, the saddle being able to slide along the seat tube in a plurality of intermediate positions between a fully retracted position and a fully extended position.

According to one of its general features, the seat tube is so arranged, with respect to the main tube, that, whatever the position of the saddle is between the fully retracted position and the fully extended position, distances xa and xb satisfy a relationship:

$$x_a = \mathrm{A} * x_b$$

$$0.9 < \mathrm{A} < 0.95$$

wherein xa is the distance between an upper centre of gravity of the saddle and the ground surface and xb is the distance between the upper centre of gravity and a centre of the pedal circle.

Such an arrangement allows a user of the frame choosing whether it prefers using it as a dandy horse or as a bicycle. The user may switch from one use to the other without requiring assistance from another person, such as the intervention of a parent to disassembly and/or reassembly the frame or pedals. Hence, learning to use a bicycle may be implemented much more efficiently.

Preferably, the seat tube is so arranged, with respect to the main tube, that, when the saddle in is the fully retracted position, the distances xa and xb satisfy a relationship:

$$x_a = \mathrm{B} * x_b$$

$$0.9 < \mathrm{B} < 0.91$$

In another embodiment, the seat tube is so arranged, with respect to the main tube, that, when the saddle is in the fully extended position, the distances xa and xb satisfy a relationship:

$$x_a = \Gamma * x_b$$

$$0.94 < \Gamma < 0.95$$

In a further embodiment, the seat tube is so arranged, with respect to the main tube, that, whatever the position of the saddle is between the fully retracted position and the fully extended position, a line joining the upper centre of gravity and the centre of the pedal circle forms an angle, with respect to a portion of the main tube adjacent to the second end, between 39° and 45.5°.

Preferably, the seat tube is so arranged, with respect to the main tube, that, when the saddle is in the fully retracted position, a line joining the upper centre of gravity and the centre of the pedal circle forms an angle, with respect to a portion of the main tube adjacent to the second end, between 39° and 39.5°.

In another embodiment, the seat tube is so arranged, with respect to the main tube, that, when the saddle is in the fully extended position, a line joining the upper centre of gravity and the centre of the pedal circle forms an angle, with respect to a portion of the main tube adjacent to the second end, between 45° to 45.5°.

Such arrangements ease even more the switch by the user between a dandy horse using mode and a bicycle using mode.

In a further embodiment, a distance $x_f$ is between 47 mm and 67 mm, wherein the distance $x_f$ is the projection, along the direction of a portion of the main tube adjacent to the second end, of a distance between the centre of the pedal circle and an intersection between an axis of the seat tube and the ground surface.

Such a distance improves the comfort for a bicycle and/or a pushbike intended for a child, in order to allow the user switching between the two using modes.

In another embodiment, the seat tube forms an angle, with respect to a portion of the main tube adjacent to the second end, between 58° and 61°.

Such a seat tube angle is particularly adapted to allow the user easily switching between the dandy horse using mode and the bicycle using mode.

Advantageously, the seat tube is so arranged, with respect to the main tube, that the distances $x_c$ and $x_p$ satisfy a relationship:

$$x_c = \Delta * x_p$$

$$0.76 < \Delta < 1.13$$

wherein $x_c$ is the distance between the upper centre of gravity of the saddle in the fully retracted position and the upper centre of gravity of the saddle in the fully extended position, and $x_p$ is a diameter of the pedal circle.

In a further embodiment, the head tube forms an angle, with respect to a portion of the main tube adjacent to the second end, between 61° and 63.5°.

One may also foresee a front fork attached to the head tube, a longitudinal direction of a lower portion of the front fork forming an angle, with respect to the head tube, between 9° and 9.5°.

Such angles allow positioning a front wheel, with respect to the frame, in a position wherein it provides a good stability of the bicycle without rendering the bicycle undynamic.

Preferably, the front fork is intended to be mechanically pivotably linked to a front wheel around an axis of rotation, said front wheel being intended to be in point contact with the ground surface, the head tube and the front fork being so arranged, with respect to the main tube, that a distance $x_d$ is strictly higher than 35 mm, and wherein the distance $x_d$ is a projection, along the direction of a portion of the main tube adjacent to the second end, of a distance between the axis of rotation and an intersection between an axis of the head tube and the ground surface.

In an embodiment, the distance $x_d$ is strictly within 35 mm and 55 mm.

One may also foresee that the second end of the main tube includes a plate comprising a rectilinear groove extending transversally through the plate and extending, from the second end, into the direction of a portion of the main tube adjacent to the second end.

Such a plate allows enabling the fixation of the wheel to the second end while preventing a user of the frame from accessing the chain.

Preferably, the dimensions $x_g$ and $x_p$ satisfy a relationship:

$$x_g = \mathrm{E} * x_p$$

$$0.4 \le \mathrm{E} \le 0.5$$

wherein $x_g$ is the length of the rectilinear groove along the direction of the portion of the main tube adjacent to the second end, and $x_p$ is a diameter of the pedal circle.

In another embodiment, the plate includes a cylindrical surface directed by a direction perpendicular to the plate, the plate being outwardly delimited by the cylindrical surface, the cylindrical surface having a circular cross section.

In an embodiment, the circular cross-section has a diameter between 80 mm and 90 mm.

Such a design of the plate and of the rectilinear groove allows preventing a user from accessing the chain using a very low amount of matter, which optimizes the lightweight of the bicycle and/or of the pushbike.

In a further embodiment, the frame includes a saddle supported by the seat tube.

According to another aspect of the invention, it is proposed a bicycle including a frame as defined above, a rear wheel mechanically linked to the second end of the main tube, a front wheel mechanically linked to the front fork, and a saddle supported by the seat tube.

The present invention and its advantages will be better understood by studying the detailed description of a specific embodiment given by way of nonlimiting examples and illustrated by the appended drawings on which:

- figure 1 is a perspective view of a bicycle according to an aspect of the present invention,
- figure 2 is a sideview of the bicycle of figure 1, the saddle being in a fully retracted position,
- figure 3 is a sideview of the bicycle of figure 1, the saddle being in a fully extended position,

- figure 4 is a detailed view of a rear end of a frame of the bicycle of figures 1 to 3, and
- figure 5 is a sideview of the rear end of figure 4.

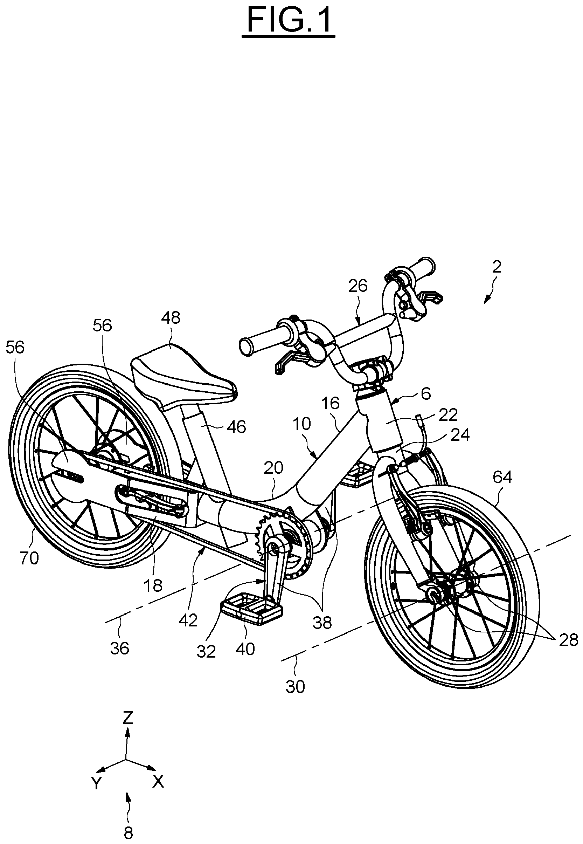

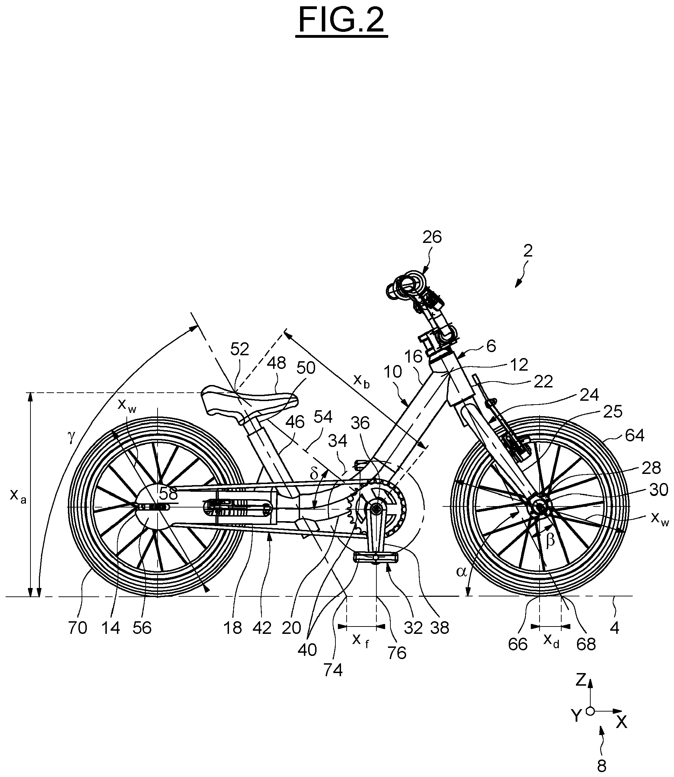

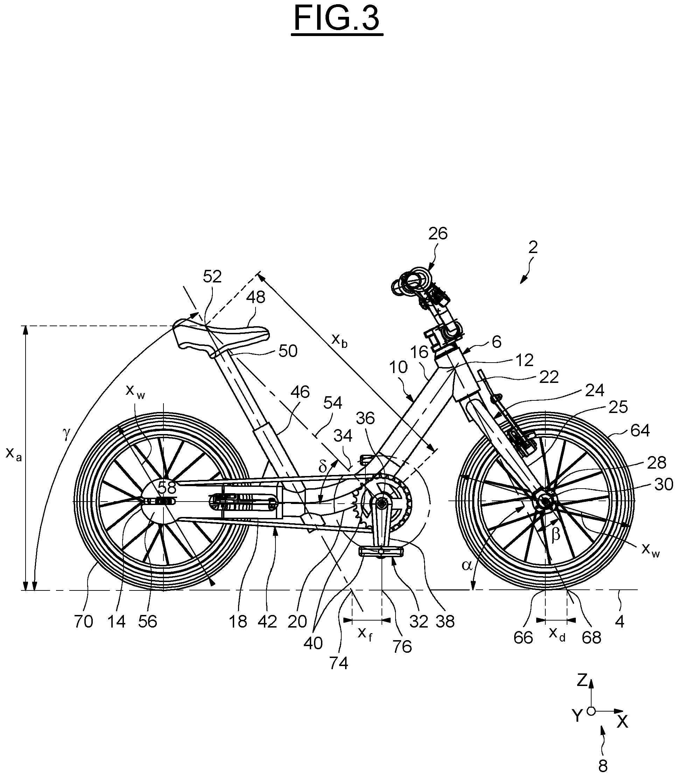

With reference to figure 1, it is schematically depicted a bicycle 2. The bicycle 2 aims at resting on a ground surface 4 (see figures 2 and 3). The ground surface 4 is generally plane and substantially horizontal. Nevertheless, the bicycle 2 may rest on another surface, in particular an inclined surface and/or a rounded surface.

The bicycle 2 includes a bicycle frame 6.

It is defined an orthonormal direct vector basis 8 attached to the frame 6. The basis 8 consists of a vector X, a vector Y and a vector Z.

In the present application, terms "vertical", "low", "down", "above" and "up" will be understood as referring relative to the basis 8 when the bicycle 2 rests normally on a horizontal flat ground surface, that is assuming that the vector Z is vertically upwards directed.

The words "longitudinal", "front", "rear", "transversal", "left" and "right" will be understood according to the frame 6, assuming that the vector X is longitudinally, frontwards directed and that the vector Y is laterally directed from the left to the right.

The word "cylindrical" will be understood according to its common definition, being namely that a cylindrical surface is a surface consisting of all the points on all the lines which are parallel to a given line and which pass through a fixed plane curve in a plane not parallel to the given line.

Referring now to figures 1 to 3, the bicycle frame 6 includes a main tube 10. The main tube 10 includes a front end 12 and a rear end 14. The main tube 10 includes a front rectilinear portion 16, a rear rectilinear portion 18 and a central curved portion 20.

The portions 16, 18 and 20 are so designed that the rear portion 18 is substantially horizontal and that the front portion 16 forms an angle about 74° with respect to the rear portion 18. The front and rear portions 16 and 18 have approximately the same length.

The frame 6 includes a head tube 22. The head tube 22 is attached to the main tube 10 at its front end 12. The head tube 22 is rectilinear and forms an angle $\alpha$, with respect to the rear portion 18, within a range 62° to 63.5°.

The bicycle 2 includes a front fork 24 rotatably mounted inside the head tube 22. A lower portion 25 of the front fork 24 forms an angle $\beta$, with reference to an axis of the head tube 22, between 9° and 9.5°. The front fork 24 is attached to handlebars 26 to provide steering of the bicycle 2. The portion 25 of the fork 24 includes a pair of mounting ends 28 defining an axis of rotation 30 for a front wheel (described later).

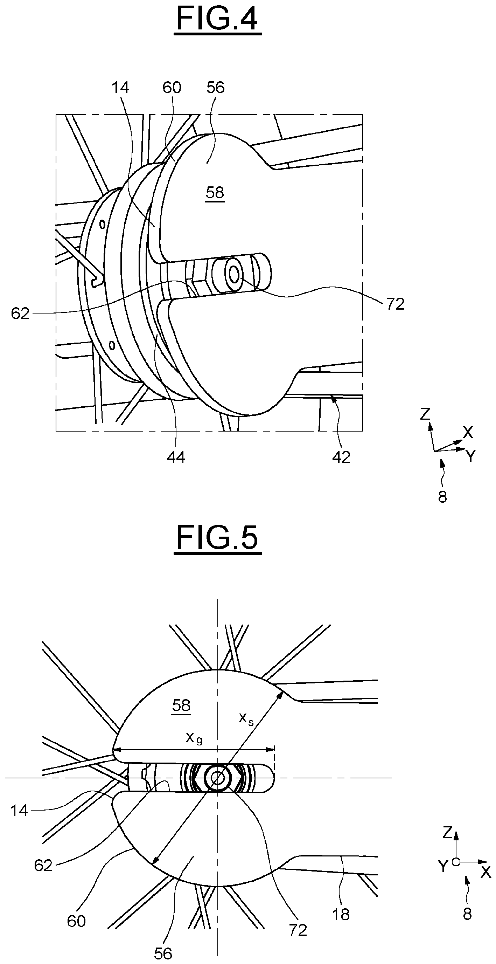

The frame 6 includes a pedal assembly 32. The pedal assembly 32 includes a pedal circle 34 around a centre axis 36. The pedal assembly 32 includes a pair of arms 38 running from the centre axis 36 into two radial opposite directions, and two pedals 40 pivotally linked to the respective arms 38, at the radial outer end thereof. In a known manner per se, the user's pressure on the pedals 40 may lead to rotation of the arms 38 around the centre axis 36 which is transmitted, by means of a chain assembly 42, to a rear gear assembly 44 (see figure 4) for propulsion of the bicycle 2. The pedal circle 34 includes all the positions of the axis of rotation of a pedal 40 relative to the arm 38. The diameter $x_p$ of the pedal circle 34 is between 176 mm to 180 mm. In another embodiment, the diameter $x_p$ is between 150 mm and 154 mm.

The frame 6 further includes a seat tube 46. The seat tube 46 is attached to the main tube 10, substantially at the junction between the portions 18 and 20. The seat tube 46 is rectilinear and forms an angle $\gamma$, with respect to the rear portion 18, between 60° and 61°.

The bicycle 2 includes a saddle 48 including a tubular extension 50 received inside the seat tube 46. By virtue of this arrangement, the saddle 48 is mechanically connected to the frame 6 in such a way that it may slide along the seat tube 46 in a plurality of positions. The saddle 48 is represented in a fully retracted position on figure 2, whereas it is represented in a fully extended position in figure 3.

Whatever the position of the saddle is between the fully retracted position and the fully extended position, one defines the distance xa between an upper centre of gravity 52 and the ground 4 and the distance xb between the upper centre of gravity 52 of the saddle 48 and the centre axis 36. The upper centre of gravity 52 is the vertical projection, on the upper surface of the saddle 48, of the centre of gravity of the saddle 48.

Referring to figure 2, in the fully retracted position, the distance xa is between 370 mm and 380 mm. The distance xb is between 325 mm and 345 mm.

Referring to figure 3, in the fully extended position, the distance xa between the upper centre of gravity 52 and the ground 4 is between 485 mm and 495 mm. The distance xb between the upper centre of gravity 52 and the axis 36 is between 460 mm and 470 mm.

Referring to figures 2 and 3, one has depicted a line 54 extending between the upper centre of gravity 52 and the centre axis 36 and perpendicular to the vector Y. In the fully retracted position, as depicted on figure 2, an angle $\delta$ between the line 54 and the vector X is between 39° and 39.5°. In the fully extended position, as depicted on figure 3, the angle $\delta$ is between 45° and 45.5°. Whatever the position of the saddle 48 is between the fully retracted position and the fully extended position, the line 54 forms an angle $\delta$, with respect to the vector X, between 39° and 45.5°.

The distance $x_c$ between the upper centre of gravity 52 in the fully retracted position and the upper centre of gravity 52 in the fully extended position is between 90 mm and 110 mm. Hence, with a diameter $x_p$ within 176 mm and 180 mm, the distance $x_c$ satisfies the relationship:

$$x_c = \Delta * x_p$$

$$0.9 < \Delta < 0.95$$

The frame 6 includes a pair of plate 56 formed on the portion 18, next to the rear end 14. The plates 56 are substantially plane and perpendicular to the vector Y. More specifically, each plate 56 is laterally delimited by a plane surface 58 perpendicular to the vector Y. Each plate 56 includes a cylindrical surface 60 directed by the direction of the vector Y. The cylindrical surface 60 has a circular axial cross-section, having a diameter xs within a range 80 mm to 90 mm. The cylindrical surfaces 60 radially, outwardly delimit the respective plates 56.

Each plate 56 includes a rectilinear groove 62. The rectilinear grooves 62 extend, along the direction of the vector Y, through the respective plates 56. Along the direction of the vector X, the rectilinear grooves 62 extend, from the rear end 14, frontwards on a distance $x_g$ between 71 mm and 89 mm.

Referring back to figures 1 to 3, the bicycle 2 includes a front wheel 64 mounted for rotation, around the axis of rotation 30, with respect to the front fork 24 by means of the mounting ends 28. The front wheel 64 is in point contact with the ground surface 4 at a point 66. The distance $x_d$ between the point 66 and a point 68 which is the intersection between the axis of the head tube 22 and the ground surface 4 is between 35 mm and 45 mm.

By virtue of this arrangement, the caster angle of the bicycle 2 is so designed that the bicycle 2 is sufficiently dynamic and has a good stability, adapted to a user who learns riding a bicycle.

The bicycle 2 further includes a rear wheel 70 mechanically attached to the rear end 14 of the frame 6. More specifically, the rear wheel 70 includes an axis 72 received inside the grooves 62 of the respective plates 56. By virtue of this arrangement, the rear wheel 70 is able to pivot, around a direction parallel to the vector Y, with respect to the frame 6. The rear wheel 70 is attached to the rear gear assembly 44.

By virtue of the design of the rear end 14 including a plate 56 outwardly delimited by a cylindrical surface of revolution, the user, who may be a child, may not access to the rear gear assembly 44. The safety of the user is thus improved.

The diameter $x_w$ of the wheels 64 and 70 substantially equals 14 inches, which corresponds to 355 mm.

Referring now to figures 2 and 3, a point 74 is the intersection of an axis of the seat tube 46 and the ground surface 4. A point 76 is the vertical projection, on the ground surface 4, of the centre axis 36. A distance $x_f$ between the points 74 and 76 is between 47 and 67 mm.

Such a design of the frame 6 allows a user, who may be a child or an adult, to use the bicycle 2 in a dandy horse using mode or in a bicycle using mode. In the dandy horse using mode, the user uses the bicycle 2 without using the pedal assembly 32. For instance, in this using mode, the user may put at least one foot on the ground surface 4 in order to keep the frame 6 vertical and push it forward. In the bicycle using mode, the user uses the pedal assembly 32.

To switch between these two using modes, the user only has to stop putting its feet on the ground surface 4 and start putting them on the pedals 40, or vice versa.

Hence, it is provided a device allowing a user to switch smoothly from a dandy horse into a bicycle, and vice versa. If the user feels confident, it may immediately switch from the dandy horse using mode into the bicycle using mode, without waiting for the intervention of another person. If, while it implements the bicycle using mode, the user feels suddenly unsafe, it may instantly switch into the dandy horse using mode, thus avoiding a fall and wounds. The user may thus learn how to ride a bicycle much more efficiently and safely.

**Claims**

1. Frame (6) for a bicycle (2) or a dandy horse intended to rest on a ground surface (4), the frame (6) comprising a main tube (10) having a first end (12) and a second end (14), a head tube (22) connected to the first end (12), a pedal assembly (32) mechanically connected to the main tube (10), the pedal assembly (32) forming a pedal circle (34), the frame (6) including a seat tube (46) connected to the main tube (10), the seat tube (46) being able to support a saddle (48), the saddle (48) being able to slide along the seat tube (46) in a plurality of intermediate positions between a fully retracted position and a fully extended position, **characterized in that** the seat tube (46) is so arranged, with respect to the main tube (10), that, whatever the position of the saddle (48) is between the fully retracted position and the fully extended position, distances xa and xb satisfy a relationship:

$$x_a = A * x_b$$

$$0.9 < A < 0.95$$

wherein xa is the distance between an upper centre of gravity (52) of the saddle (48) and the ground surface (4) and xb is the distance between the upper centre of gravity (52) and a centre (36) of the pedal circle (34).

2. Frame (6) according to claim 1, wherein the seat tube (46) is so arranged, with respect to the main tube (10), that, when the saddle (48) in is the fully retracted position, the distances xa and xb satisfy a relationship:

$$x_a = B * x_b$$

$$0.9 < B < 0.91$$

and/or wherein the seat tube (46) is so arranged, with respect to the main tube (10), that, when the saddle (48) is in the fully extended position, the distances xa and xb satisfy a relationship:

$$x_a = \Gamma * x_b$$

$$0.94 < \Gamma < 0.95$$

3. Frame (6) according to claim 1 or 2, wherein the seat tube (46) is so arranged, with respect to the main tube (10), that, whatever the position of the saddle (48) is between the fully retracted position and the fully extended position, a line (54) joining an upper centre of gravity (52) and the centre (36) of the pedal circle (34) forms an angle ($\delta$), with respect to a portion (18) of the main tube (10) adjacent to the second end (14), between 39° and 45.5°.

4. Frame (6) according to any of claims 1 to 3, wherein a distance $x_f$ is between 47 mm and 67 mm, wherein the distance $x_f$ is the projection, along the direction of a portion (18) of the main tube (10) adjacent to the second end (14), of a distance between the centre (36) of the pedal circle (34) and an intersection (74) between an axis of the seat tube (46) and the ground surface (4).

5. Frame (6) according to any of claims 1 to 4, wherein the seat tube (46) forms an angle ($\gamma$), with respect to a portion (18) of the main tube (10) adjacent to the second end (14), between 58° and 61°.

6. Frame (6) according to any of claims 1 to 5, wherein the seat tube (46) is so arranged, with respect to the main tube (10), that the distances $x_c$ and $x_p$ satisfy a relationship:

$$x_c = \Delta * x_p$$

$$0.76 < \Delta < 1.13$$

wherein $x_c$ is the distance between an upper centre of gravity (52) of the saddle (48) in the fully retracted position and the upper centre of gravity (52) of the saddle (48) in the fully extended position, and $x_p$ is a diameter of the pedal circle (34).

7. Frame (6) according to any of claims 1 to 6, wherein the head tube (22) forms an angle ($\alpha$), with respect to a portion (18) of the main tube (10) adjacent to the second end (14), between 61° and 63.5°.

8. Frame (6) according to any of claims 1 to 7, further including a front fork (24) attached to the head tube (22), a longitudinal direction of a lower portion (25) the front fork (24) forming an angle ($\beta$), with respect to the head tube (22), between 9° and 9.5°.

9. Frame (6) according to any of claims 1 to 8, wherein the front fork (24) is intended to be mechanically pivotably linked to a front wheel (64) around an axis of rotation (30), said front wheel (64) being intended to be in point contact with the ground surface (4), the head tube (22) and the front fork (24) being so arranged, with respect to the main tube (10), that a distance $x_d$ is strictly higher than 35 mm, and wherein the distance $x_d$ is a projection, along the direction of a portion (18) of the main tube (10) adjacent to the second end (14), of a distance between the axis of rotation (30) and an intersection (68) between an axis of the head tube (22) and the ground surface (4).

10. Frame (6) according to claim 9, wherein the distance $x_d$ is strictly within 35 mm and 55 mm.

11. Frame (6) according to any of claims 1 to 10, wherein the second end (14) of the main tube (10) includes a plate (56) comprising a rectilinear groove (62) extending transversally through the plate (56) and extending, from the second end (14), into the direction of a portion (18) of the main tube (10) adjacent to the second end (14).

12. Frame (6) according to claim 11, wherein the dimensions $x_g$ and $x_p$ satisfy a relationship:

$$x_g = E * x_p$$

$$0.4 \leq E \leq 0.5$$

wherein $x_g$ is the length of the rectilinear groove (62) along the direction of the portion (18) of the main tube (10) adjacent to the second end (14), and $x_p$ is a diameter of the pedal circle (36).

13. Frame (6) according to claim 11 or 12, wherein the plate (56) includes a cylindrical surface (60) directed by a direction perpendicular to the plate (56), the plate (56) being outwardly delimited by the cylindrical

**EP 4 005 907 A1**

surface (60), the cylindrical surface (60) having a circular cross section.

14. Frame (6) according to claim 13, wherein the circular cross section has a diameter between 80 mm and 90 mm.

15. Bicycle (2) including a frame (6) according to any of claims 1 to 14, a rear wheel (70) mechanically linked to the second end (14) of the main tube (10), a front wheel (64) mechanically linked to the front fork (24), and a saddle (48) supported by the seat tube (46).

# FIG.1

# FIG.2

# FIG.3

# FIG.4

# FIG.5

Europäisches
Patentamt

European
Patent Office

Office européen
des brevets

## EUROPEAN SEARCH REPORT

Application Number

EP 20 30 6439

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 17501 A A.D. 1901 (JARVIS HAROLD [US]) 17 July 1902 (1902-07-17) * abstract; figures * | 1-15 | INV. B62K3/02 B62K19/36 |
| X | US 2 147 732 A (BOYNTON EARL S) 21 February 1939 (1939-02-21) * abstract; figures * | 1 | |
| X | US 3 834 734 A (CHIAPPETTI P) 10 September 1974 (1974-09-10) * abstract; figure 3 * | 1 | |
| X | EP 0 870 672 A1 (HEIN JOHANN [DE]) 14 October 1998 (1998-10-14) * abstract; figures * | 1,9 | |
| X | EP 2 386 469 A1 (ELECTRA BICYCLE COMPANY INC [US]) 16 November 2011 (2011-11-16) * abstract; figures * | 1-15 | |
| X | WO 2010/137608 A1 (ALPS ELECTRIC CO LTD [JP]; OTSU SATORU [JP]) 2 December 2010 (2010-12-02) * abstract; figures * | 1-15 | TECHNICAL FIELDS SEARCHED (IPC) B62K |
| X | DE 200 00 170 U1 (VAKULENKO OLEXI [DE]) 21 June 2001 (2001-06-21) * abstract; figures * | 1-15 | |
| X | EP 2 490 930 A1 (ENJOY SERVICES & DEV B V [NL]) 29 August 2012 (2012-08-29) * abstract; figures * | 1 | |

The present search report has been drawn up for all claims

| Place of search | Date of completion of the search | Examiner |
|---|---|---|
| The Hague | 20 April 2021 | Wagner, Helmut |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 20 30 6439

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2021

| Patent document cited in search report | | Publication date | Patent family member(s) | | Publication date |
|---|---|---|---|---|---|
| GB 190117501 | A | 17-07-1902 | NONE | | |
| US 2147732 | A | 21-02-1939 | NONE | | |
| US 3834734 | A | 10-09-1974 | NONE | | |
| EP 0870672 | A1 | 14-10-1998 | NONE | | |
| EP 2386469 | A1 | 16-11-2011 | CA | 2541418 A1 | 21-04-2005 |
| | | | DK | 1687196 T3 | 19-01-2015 |
| | | | DK | 2386469 T3 | 31-08-2015 |
| | | | EP | 1687196 A2 | 09-08-2006 |
| | | | EP | 2386469 A1 | 16-11-2011 |
| | | | ES | 2529445 T3 | 20-02-2015 |
| | | | ES | 2545341 T3 | 10-09-2015 |
| | | | PL | 1687196 T3 | 30-06-2015 |
| | | | PL | 2386469 T3 | 29-01-2016 |
| | | | US | 2005161897 A1 | 28-07-2005 |
| | | | US | 2010295267 A1 | 25-11-2010 |
| | | | US | 2012205891 A1 | 16-08-2012 |
| | | | WO | 2005035346 A2 | 21-04-2005 |
| WO 2010137608 | A1 | 02-12-2010 | JP | 2012148580 A | 09-08-2012 |
| | | | WO | 2010137608 A1 | 02-12-2010 |
| DE 20000170 | U1 | 21-06-2001 | NONE | | |
| EP 2490930 | A1 | 29-08-2012 | EP | 2490930 A1 | 29-08-2012 |
| | | | NL | 2003703 C2 | 03-05-2011 |
| | | | WO | 2011049445 A1 | 28-04-2011 |

EPO FORM P0459

For more details about this annex : see Official Journal of the European Patent Office, No. 12/82